# EUROPÄISCHE PATENTSCHRIFT

(11) **EP 2 297 168 B1**
(45) Veröffentlichungstag und Bekanntmachung des Hinweises auf die Patenterteilung: **29.08.2012**
(21) Anmeldenummer: 09768886.5
(22) Anmeldetag: 27.05.2009
(51) Int. Cl.: C07F 7/00, C07F 7/24, C07F 7/28, C07F 7/30, C07F 17/00, C23C 18/12, H01L 27/11, H01L 21/02

(54) **MISCHUNGEN VON PRECURSOREN ZUR HERSTELLUNG VON KERAMISCHEN SCHICHTEN MITTELS MOCVD**
MIXTURES OF PRECURSORS FOR PRODUCING CERAMIC LAYERS BY MEANS OF MOCVD
MÉLANGES DE PRÉCURSEURS POUR FABRIQUER DES COUCHES CÉRAMIQUES PAR MOCVD

(30) Priorität: 24.06.2008 DE 102008029691
(43) Veröffentlichungstag der Anmeldung: 23.03.2011
(73) Patentinhaber: Leibniz-Institut für Neue Materialien gemeinnützige GmbH, 66123 Saarbrücken (DE)
(72) Erfinder: VEITH, Michael, 66386 St.-Ingbert (DE); BENDER, Michael, 66386 St.-Ingbert (DE)
(74) Vertreter: Gierlich, Johannes
(86) Internationale Anmeldenummer: PCT/EP2009/003764
(87) Internationale Veröffentlichungsnummer: WO 2009/156037

(56) Entgegenhaltungen:
- US-A- 5 326 892
- US-A- 5 516 363
- DATABASE CA [Online] CHEMICAL ABSTRACTS SERVICE, COLUMBUS, OHIO, US; APBLETT, ALLEN W. ET AL: "Preparation of a metalorganic deposition precursor for barium titanate" XP002543719 gefunden im STN Database accession no. 122:140178 & CERAMIC TRANSACTIONS , 43(FERROIC MATERIALS: DESIGN, PREPARATION, AND CHARACTERISTICS), 73-7 CODEN: CETREW; ISSN: 1042-1122, 1994,
- DATABASE CA [Online] CHEMICAL ABSTRACTS SERVICE, COLUMBUS, OHIO, US; DAVIES, ALWYN G. ET AL: "Preparation of organotheterometalloxanes" XP002543720 gefunden im STN Database accession no. 69:77392 & CHEMISTRY & INDUSTRY (LONDON, UNITED KINGDOM) , (28), 949-50 CODEN: CHINAG; ISSN: 0009-3068, 1968,
- DATABASE CA [Online] CHEMICAL ABSTRACTS SERVICE, COLUMBUS, OHIO, US; VAARTSTRA, BRIAN A.: "Bimetallic precursors for ferroelectric thin films; molecular control of stoichiometry" XP002543721 gefunden im STN Database accession no. 120:66030 & MATERIALS RESEARCH SOCIETY SYMPOSIUM PROCEEDINGS , 282(CHEMICAL PERSPECTIVES OF MICROELECTRONIC MATERIALS III), 689-95 CODEN: MRSPDH; ISSN: 0272-9172, 1993,
- MANDAL, SWADHIN K. ET AL: "Oxygen-Bridged Hybrid Metallocene-Nonmetallocene Polymetallic Catalysts of Group 4 Metals for Bimodal Activity in Olefin Polymerization: Synthesis, Characterization, and Theoretical Investigation" INORGANIC CHEMISTRY (WASHINGTON, DC, UNITED STATES) , 46(24), 10158-10167 CODEN: INOCAJ; ISSN: 0020-1669, 2007, XP002543718

## Beschreibung

### Gebiet der Erfindung

Die Erfindung betrifft eine Mischung von Precursoren zur Herstellung keramischer Schichten mittels MOCVD und ein Verfahren zur Herstellung solcher Schichten.

### Stand der Technik

Keramische Zusammensetzungen spielen in der heutigen Technik eine wichtige Rolle. Allgemein versteht man darunter anorganische, polykristalline Werkstoffe, insbesondere aus Metalloxiden. Die Eigenschaften von Keramiken können abhängig von der Zusammensetzung und Herstellung in einem weiten Bereich variieren. So können neben besonders harten und widerstandsfähigen Keramiken auch Keramiken mit besonderen elektrischen Eigenschaften, wie hohe Dielektrizitätskonstante, Isolatoren, Halbleiter, ferroelektrische oder piezoelektrische Eigenschaften vorliegen. Dabei sind insbesondere die letzteren Eigenschaften für die heutige Technik von besonders großer Bedeutung. Dies sind Keramiken, welche einen piezoelektrischen Effekt aufweisen, d.h. solche Keramiken verformen sich beim Anlegen eines äußeren elektrischen Feldes. Umgekehrt kommt es bei diesen Keramiken zur Ausbildung eines elektrischen Feldes bei Verformung. Diese Eigenschaften machen diese Zusammensetzungen gerade für den Sensor- oder Aktorbau sehr interessant. Dabei können auch nur bestimmte kristalline Modifikationen die gewünschten Eigenschaften aufweisen. Beispiele für piezokeramische Zusammensetzungen sind ZnO, Bariumtitanat (BTO), Strontiumtitanat, Bleititanat (PT) oder Bleizirkoniumtitanat (PZT)

Die Vielfalt an Eigenschaften bedingt auch eine Vielfalt an möglichen Zusammensetzungen. Dabei spielen gerade Zusammensetzungen, welche mehrere unterschiedliche Metallionen enthalten, eine wichtige Rolle. Im Folgenden werden unter Metallen auch die entsprechenden Metallionen verstanden. Eine Keramik mit 2 Metallen enthält demnach 2 unterschiedliche Metallionen.

Neben der komplizierten Zusammensetzung können sich die Eigenschaften einer Keramik abhängig vom Gehalt an einzelnen Komponenten, wie beispielsweise an bestimmten Metallionen, stark verändern. Gerade bei der industriellen Herstellung ist daher eine genaue Kontrolle der Zusammensetzung der hergestellten Keramiken von entscheidender Bedeutung. Dies macht die Produktion sehr aufwändig und teuer. Dabei zeigen gerade Keramiken mit mehr als 2 Metallen besonders vorteilhafte Eigenschaften, insbesondere ferroelektrische und / oder piezoelektrische Eigenschaften. Beispiele für solche Zusammensetzungen sind Bariumstrontiumtitanat, Bleilanthanzirkoniumtitanat (PLZT) oder Bleizirkoniumtitanat (PZT). Keramiken, welche mehr als 2 Metallen enthalten, wie PZT, zeigen besonders vorteilhafte piezoelektrische Eigenschaften. Allerdings stellt gerade ihre Zusammensetzung ein großes Problem für die wirtschaftliche Herstellung solcher Keramiken, insbesondere PZT dar.

Für die Herstellung keramischer Schichten sind einige Verfahren bekannt, wie beispielsweise Trockenpressen mit einem anschließenden Sinterschritt. Allerdings besitzen diese Verfahren eine verfahrensbedingte untere Grenze der Schichtdicke von ca. 100 µm. Auch sind diese Verfahren für das Beschichten von Kanten und feinen Strukturen nicht geeignet.

Dünnere Schichten sind zwar mit CVD- (*chemical vapor deposition*), MOCVD- (*metall organic chemical vapor deposition*) oder Sputterverfahren erhältlich, aber diese Verfahren stellen gerade bei der Verwendung von mehr als einem Precursor besondere Anforderungen an Verfahren und verwendete Verbindungen. So müssen beispielsweise für PZT die Precursoren für alle drei Metalle (Pb, Zr, Ti) so aufeinander abgestimmt sein, dass die gewünschte Perowskitphase entsteht. Dies bedeutet nicht nur die Abstimmung mehrerer Precursorquellen im Herstellungsverfahren, sondern auch die Eigenschaften der Precursoren müssen chemisch zueinander passen. Da meistens für jedes Metall ein Precursor verwendet werden muss, sind diese Verfahren nur schwer kontrollierbar und wirtschaftlich unrentabel. Eine Mischung der Precursoren ist oft nicht möglich, da beispielsweise Ligandenaustausch, Redoxreaktionen, insbesondere unter den Verdampfungsbedingungen, zur unerwünschten Nebenreaktionen führen. Auch können sich die Precursoren in ihren physikalischen Eigenschaften, wie ihrer Flüchtigkeit oder der verdampfungstemperatur, stark unterscheiden. Je mehr Precursoren eingesetzt werden, desto schwieriger ist es, das Verfahren und damit auch die Qualität der entstehenden Schicht zu kontrollieren.

Um die vorstehend genannten Probleme zu lösen, wurden auch Lösungen mehrerer Precursoren eingesetzt. Dabei führen die eingebrachten Lösungsmittel zu neuen Problemen, beispielsweise zu Unreinheiten im Produkt. Außerdem muss das Lösungsmittel wieder aus dem Reaktionsraum entfernt und damit auch entsorgt werden.

Aus dem Stand der Technik ist zwar aus US 5,326,892 und CA Nr. 120:66030 (Vaartstra, Brian A. Adv. Technol. Mater., 1993, 282, 689-95) die Synthese von bimetallischen Precursoren bekannt, aber diese Schriften behandeln keine Mischungen von Precursoren.

Die Schrift US 5,516,363 offenbart Mischungen von Precursoren für Perovskit-Schichten, welche aus Carboxylaten erhalten werden.

Bimetallische Precursoren für Bariumtitanat-Schichten sind auch in CA Nr. 122:140178 (Apblett, Allen W., et al. Ceramic Transactions 1994, 43, 73-7) offenbart.

Weitere bimetallische Verbindungen werden in CA Nr. 69:77392 (Davies, Alwyn G. et al. Chemistry & Industry 1968, 28, 949-50) und in Mandal, Swadhin K. et al. Inorganic Chemistry 2007 Vol. 46(24) p. 10158-10167 beschrieben.

### Aufgabe

Aufgabe der Erfindung ist es, eine Mischung von Precursoren für MOCVD von keramischen Schichten anzugeben, um die Nachteile aus dem Stand der Technik zu überwinden. Die Mischung soll insbesondere für keramische Schichten, welche mehr als 2 Metalle enthalten, besonders piezokeramische Schichten, wie PZT, geeignet sein.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Die Aufgabe wird von einer Mischung von volatilen Precursoren für MOCVD gelöst, welche mindestens einen volatilen bimetallischen Precursor und mindestens einen weiteren volatilen Precursor enthält. Dadurch ist es möglich mit nur wenigen Quellen keramische Schichten mit mehr als 2 Metallen kontrolliert aufzubringen. Auf diese Weise entfällt die komplizierte Steuerung vieler Precursorquellen. Durch die Verwendungen von schen Precursoren wird daher die Anzahl an möglichen Parametern deutlich reduziert und die Anpassung des Verfahrens an unterschiedliche Verbindungen erleichtert.

Vorteilhafterweise werden die Precursoren derart ausgewählt, dass die Mischung folgende Bedingungen erfüllt:
1) Die eingesetzten Precursoren müssen chemisch kompatibel sein, d.h. es darf nicht zur Bildung von nicht-volatilen polymeren oder mehrkernigen Verbindungen kommen.
2) Es dürfen unter MOCVD-Bedingungen keine Präzipitate durch Ligandenaustausch an den Metallzentren oder Reaktionen zwischen den Liganden entstehen.
3) Es darf zu keinen unerwünschten Redoxreaktionen kommen.

Ein volatiler bimetallischer Precursor im Sinne der Anmeldung ist eine Verbindung, welche mindestens 2 unterschiedliche Metalle enthält und zersetzungsfrei in die gasförmige Phase überführt werden kann. Ein solcher Precursor ist daher mit Vorteil eine molekulare Verbindung. Bevorzugt sind Precursoren, welche bei der Durchführung der MOCVD aus der flüssigen Phase in die gasförmige Phase überführt werden.

Als Metalle oder metallisch im Sinne der Anmeldung werden Ionen oder Atome eines metallischen Elements betrachtet. Es handelt sich demnach um metallorganische Verbindungen.

Bei dem mindestens einen weiteren Precursor kann es sich um einen beliebigen geeigneten Precursor handeln, wie beispielsweise aus dem Stand der Technik bekannte Alkoxide, β-1,3-diketone oder ähnliche metallorganische Verbindungen. Allerdings sollte er entsprechend der vorstehenden Punkte in seinen Eigenschaften auf den bimetallischen Precursor abgestimmt sein, insbesondere in Bezug auf die Verdampfungs- und Zersetzungstemperatur. Bevorzugt sind Precursoren mit einer ähnlichen Verdampfungstemperatur wie der eingesetzte bimetallische Precursor.

In einer besonders vorteilhaften Weiterbildung der Erfindung bilden der bimetallische Precursor und mindestens ein weiterer Precursor eine azeotrope Mischung. Dies bedeutet, dass die Mischung nicht durch Destillation aufgetrennt werden kann. Wird eine Mischung, welche ein Azeotrop ausbilden kann, mehrmals unter gleichen Bedingungen destilliert, so nähert sich die Zusammensetzung des Destillats mit jeder Destillation der azeotropen Zusammensetzung an, bis sich die Zusammensetzung nicht mehr ändert. Diese Zusammensetzung wird auch als Azeotrop bezeichnet. Das Azeotrop kann dabei von den Verdampfungsbedingungen abhängen.

Der Siedepunkt der azeotropen Mischung kann niedriger (positives Azeotrop), aber auch höher (negatives Azeotrop), als die Siedepunkte der einzelnen Bestandteile sein. Es kann sich auch um eine Mischung handeln, welche ein Heteroazeotrop bildet. In diesem Fall liegen die Bestandteile in der Mischung nicht in einer gemeinsamen Phase vor.

Eine azeotrope Mischung erlaubt eine besonders effiziente Kontrolle der Zusammensetzung der Schichten, da die entstehende gasförmige Phase konstant ist, sodass es zu keinen Konzentrationsschwankungen in der gasförmigen Phase kommen kann. Dadurch werden die entstehenden Schichten besonders homogen, fehlerfrei und besser reproduzierbar. Außerdem ist es so möglich, mit Hilfe von nur einer Precursorquelle keramische Schichten mit mehr als 2 Metallen, wie beispielsweise PZT, zu fertigen. Dadurch wird das Verfahren nochmals deutlich kostengünstiger und ist auf einfache Weise in bestehende Verfahren integrierbar. Bisher waren keine azeotropen Mischungen, insbesondere zur Herstellung von keramischen Schichten mit mehr als 2 Metallen, besonders piezokeramischer Schichten, wie PZT, bekannt.

Da die erfindungsgemäße Mischung nur aus mindestens 2 Precursoren besteht, kann durch kleine Veränderungen, beispielsweise in der Substitution oder Art der Reste, die physikalischen Eigenschaften und damit auch die Zusammensetzung des Azeotrops verändert werden. Dadurch ist eine Anpassung der Zusammensetzung der entstehenden Schicht möglich.

In einer vorteilhaften Weiterbildung ist der bimetallische Precursor eine Verbindung der Formel (I)

(R¹)ₐMOM' (R²)_{b} (I)

worin M Pb, V, Ba, Sr oder Zn, bevorzugt Pb, und M' Ti, Zr, Hf, Ge, Ta, Nb oder ein Lanthanoid, bevorzugt Ti oder Zr, darstellen und die Reste R¹ und auch R² jeweils gleich oder verschiedene Reste darstellen, ausgewählt aus der Gruppe enthaltend gesättigte oder ungesättigte Alkyl-, Alkoxy-, Aryloxy-, Alkaryloxy-, Acyloxy-, Alkylcarbonylreste, Amide, Imide, β-Diketone, β-Diiminate, Cyclopentadienyle und a und b entsprechend der Valenz von M und M' unabhängig voneinander Werte zwischen 1 und 5 haben. Die Reste R¹ oder R² können auch miteinander und/oder untereinander verbunden sein.

Bevorzugte Alkylreste sind beispielsweise C₁₋₈-Alkylreste, insbesondere der C₁₋₅-Alkylreste, wie Methyl, Ethyl, n-Propyl, i-Propyl, n-Butyl, i-Butyl, sek.-Butyl, tert.-Butyl oder Neopentyl, Alkenyl, besonders bevorzugt sind Ethyl, i-Propyl oder tert.-Butyl. Als ungesättigte Alkylreste sind Alkenyle, wie beilspielsweise C₂₋₆-Alkenyle, insbesondere Vinyl, 1-Propenyl, 2-Propenyl oder Butenyl oder Alkinyle, wie z.B. C₂₋₆-Alkinyle, wie z.B. Ethinyl oder Propargyl, oder Aryle, insbesondere C₆₋₁₀-Aryl wie beispielsweise Phenyl, sowie die entsprechenden Aralkyl-und Alkarylreste, wie beispielsweise Tolyl und Benzyl, und cyclische C₃-C₁₂-Alkyl- und -Alkenylreste, wie beispielsweise Cyclopropyl, Cyclopentyl und Cyclohexyl bevorzugt.

Bevorzugte Alkoxyreste sind Reste der Formel OR, wobei R für gesättigte oder ungesättigte Alkylreste gemäß der vorstehenden Definition für Alkylreste steht, insbesondere C₁₋₆-Alkoxide, wie Methoxy, Ethoxy, i-Propoxy, n-Propoxy, n-Butoxy, i-Butoxy, sek-Butoxy oder tert.-Butoxy, besonders bevorzugt tert.-Butoxy oder i-Propoxy.

Bevorzugte Aryloxyreste sind C₁₋₅-Acyloxy, wie z.B. Phenoxy, bevorzugte Alkaryloxyreste sind Benzoyloxy, bevorzugte Acyloxy sind C₁₋₆-Acyloxy, vorzugsweise C₁₋₄-Acyloxy, wie beispielsweise Acetoxy oder Propionoxy, bevorzugte Alkylcarbonylreste sind C₂-₇-Alkylcarbonyl, wie Acetyl.

Die Reste R¹ und/oder R² können übliche Substituenten aufweisen, bei denen es sich um funktionelle Gruppen handeln kann. Übliche Substituenten sind beispielsweise Halogen (Chlor oder Fluor), Ether, Ester, Amino, Monoalkylamino, Dialkylamino, Nitro, Cyano, Isocyano, Aldehyd, Keto, Alkylcarbonyl. Diese Substituenten sind über zweiwertige Brückengruppen, insbesondere Alkylen-, Alkenylen- oder Arylen-Brückengruppen, die durch Sauerstoff oder NH-Gruppen unterbrochen sein können an M, bzw. M' gebunden, beispielsweise in Dimethylaminoethoxid.

Ebenfalls geeignet sind mit Alkyl-, Aryl- und/oder Aralkylresten mono- oder disubstituierte Amide, wobei die Alkyl- Aryl- und/oder Arylakylgruppen wie vorstehend definiert sind, wie beispielsweise Dimethylamid, Diisopropylamid oder Di-tert.-Butylamid, oder auch mit Amide, welche Heteroatome enthalten, wie N,N-Bis(trimethylsilyl)amid, oder Benzamido oder Aldoximoder Ketoximgruppen.

Ebenfalls geeignet sind β-Diketone, gemäß der Formel [R³-CO=X-CO-R³]⁻, wobei dies auch substituierte β-Diketone (X entspricht CH), wie Imide oder β-Diiminate miteinschließt. Die Reste R³ können gleich oder verschieden sein und stehen für Reste gemäß der Definition von R¹. Bevorzugt sind Alkylreste, welche auch substituiert sein könne. Besonders bevorzugt sind Methyl, Ethyl, n-Propyl, i-Propyl, n-Butyl, i-Butyl, sek.-Butyl, tert.-Butyl und Neopentyl.

Ebenfalls geeignet sind Cyclopentadienyle, welche auch substituiert sein können. Bevorzugt sind unsubstituierte oder alkylsubstituierte Cyclopentadienyle, wie beispielsweise Cyclopentadienyl, Tetramethylcyclopentadienyl, Pentamethylcyclopentadienyl, Ethylcyclopentadienyl oder Butylcyclopentadienyl.

Abhängig vom Metall können R¹ und/oder R² auch noch andere Liganden, wie Azide, Cyanide, Isocyanide, CO-Liganden, Oxogruppen, Halogenide, Thiocyanate oder Phosphine darstellen.

In einer vorteilhaften Weiterbildung ist der bimetallische Precursor eine Verbindung der Formel (II)

(R⁴)_{c}MM' (R⁵) _{d} (II)

Wobei M, M' und R⁴ und R⁵ entsprechend Formel (I) wie vorstehend definiert sind. Entsprechend der Valenz von M, bzw. M' können c und d Werte zwischen 1 und 5 annehmen.

Mit Vorteil handelt es sich beim bimetallischen Precursor um eine Verbindung der Formel (III)

(R⁶)ₑPbOM' (R⁷)_{f} (III)

wobei M' Ti oder Zr darstellt, R⁶ Alkylreste, bevorzugt Methyl, Ethyl, n-Propyl, i-Propyl, n-Butyl, i-Butyl, sek.-Butyl, tert.-Butyl, Neopentyl, besonders bevorzugt Ethyl, i-Propyl und tert.-Butyl, und R⁷ Alkoxygruppen, wie Methoxy, Ethoxy, i-Propoxy, n-Propoxy, n-Butoxy, i-Butoxy, sek.-Butoxy, tert.-Butoxy, besonders bevorzugt i-Propoxy oder tert.-Butoxy darstellen, und e abhängig von der Valenz von Pb den Wert 1 oder 3 hat und f den Wert 3 hat, insbesondere bevorzugt haben e und f den Wert 3.

Der mindestens einen weiteren Precursor kann eine metallorganische Verbindung, welche ein Metall und Liganden entsprechend den vorstehenden Definitionen enthält, umfassen. Mit Vorteil umfasst der mindestens eine weitere Precursor eine bimetallische Verbindung entsprechend der vorstehenden Definition, bevorzugt eine Verbindung gemäß der Formel (I), besonders bevorzugt eine Verbindung gemäß der Formel (III).

In einer vorteilhaften Weiterbildung unterscheidet sich dieser weitere Precursor nur im Metall M' von der bimetallischen Verbindung. Dadurch besteht eine hohe Wahrscheinlichkeit, dass beide Verbindungen sich nur geringfügig in ihren physikalischen und chemischen Eigenschaften, wie beispielsweise Verdampfungsund Zersetzungstemperatur, unterscheiden. So kann die Mischung aus genau 2 Verbindungen bestehen, welche sich nur im Metall M' unterscheiden.

In einer weiteren vorteilhaften Weiterbildung enthält die Mischung kein Lösungsmittel. Dadurch können besonders reine Schichten erhalten werden.

Desweiteren betrifft die Erfindung eine gasförmige Zusammensetzung, welche aus einer erfindungsgemäßen Mischung erzeugt wurde.

Weiterhin betrifft die Erfindung ein Verfahren zur Herstellung keramischer Schichten mittels MOCVD, wobei eine gasförmige Zusammensetzung in einen Reaktionsraum mit einem Substrat eingebracht wird, wobei die gasförmige Zusammensetzung einen volatilen bimetallischen Precursor und mindestens einen weiteren volatilen Precursor beinhaltet.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Das Verfahren kann entsprechend den dem Fachmann aus dem Stand der Technik bekannten MOCVD-Techniken durchgeführt werden.

Das Einbringen der gasförmigen Mischung in den Reaktionsraum kann beispielsweise über Verdampfung im Reaktionsraum, Durchleitung eines inerten Trägergases oder Direktinjektion (DLI-CVD) durchgeführt werden.

Im Falle einer Verdampfung im Reaktionsraum kann in Abhängigkeit von der eingesetzten Mischung ein Unterdruck von 0.001 mbar bis 700 mbar, bevorzugt zwischen 0.01 mbar und 50 mbar, bei einer Temperatur von 15 °C bis 200 °C, bevorzugt von 20 °C bis 80 °C verwendet werden.

In einer besonders vorteilhaften Weiterbildung der Erfindung wird die gasförmige Zusammensetzung aus einer azeotropen Mischung gebildet.

Dabei kann die azeotrope Mischung auch Bestandteile enthalten, welche nicht oder nur im sehr geringem Maße auf dem Substrat abgelagert werden. So können beispielsweise im geringen Maße, wie zum Beispiel zwischen 0.1 bis 30 Gew.-%, bevorzugt zwischen 0.1 bis 10 Gew.-%, weitere Substanzen hinzugefügt werden, beispielsweise um das Azeotrop zu verschieben oder um die Zusammensetzung der gasförmigen Phase zu beeinflussen. Dies können auch inerte Lösungsmittel sein.

Bei dem volatilen bimetallischen Precursor handelt es sich bevorzugt um einen bimetallischen Precursor gemäß der Erfindung, wie bereits beschrieben.

Bei dem weiteren Precursor kann es sich um einen beliebigen weiteren Precursor handeln. Allerdings sollte er in seinen Eigenschaften auf den bimetallischen Precursor abgestimmt sein, insbesondere in Bezug auf die Verdampfungs- und Zersetzungstemperatur. So kann es sich bei dem weiteren Precursor um einen üblichen Precursor handeln, welcher eine ähnliche Verdampfungstemperatur wie der eingesetzte bimetallische Precursor hat.

Mit Vorteil handelt es sich bei dem weitere Precursor ebenfalls um eine bimetallische Verbindung entsprechend der Definition, bevorzugt eine Verbindung gemäß der Formel (I), besonders bevorzugt eine Verbindung gemäß der Formel (III). Dadurch können sich beide Verbindungen nur geringfügig in ihren physikalischen Eigenschaften, wie beispielsweise Verdampfungs- und Zersetzungstemperatur unterscheiden.

Die Temperatur des Substrats kann der eingesetzten Mischung angepasst werden. Mit Vorteil liegt die Substrattemperatur zwischen 400 °C und 700 °C, bevorzugt zwischen 450 °C und 600 °C.

Als Substrate können alle dem Fachmann bekannten Substrate, welche für CVD unter den angegebenen Temperaturen geeignet sind, eingesetzt werden, wie beispielsweise Keramiken, Halbleiter, Metalle, Glas, bevorzugt sind einkristalline Keramiken, bzw. Materialien, die zur Anregung des epitaktischen Schichtenwachstums dienen, wie beispielsweise Saphir, MgO, Si, ZrO₂, LaAlO₃ (LAO) und SrTiO₃. Das Substrat kann auch bereits mit anderen Schichten beschichtet sein, insbesondere mit Schichten, zur Anregung, bzw. Verbesserung des epitaktischen Schichtenwachstums, wie beispielsweise SrRuO₃, Pt, γ-Al₂O₃, SiN, PrBaCuO, CaRuO₃, CaTiO₃, ZnO₂ (Y-stabilisiert), SnO₂, NdGaO₃, SrTiO₃ und LaNiO₃.

Gegebenenfalls kann nach der Beschichtung noch eine Wärmebehandlung des Substrats angeschlossen werden, beispielsweise um eine bestimmte Modifikation auszubilden. Dies kann auch in Gegenwart eines Gases durchgeführt werden, wie beispielsweise Ar, N₂, He, N₂O, O₂, O₃, NO, NO₂, H₂O, H₂O₂, Luft oder Kombinationen davon.

Die erzeugten Schichten können in der gesamten Bandbreite der mit CVD herstellbaren Schichtdicken hergestellt werden. Dabei erlaubt das Verfahren insbesondere die Herstellung von Schichten mit einer Dicke von unter 100 µm, bevorzugt unter 50 µm, besonders bevorzugt zwischen 100 nm und 2 µm.

Mit dem erfindungsgemäßen Verfahren oder mit der erfindungsgemäßen Mischung hergestellte Schichten können natürlich auch mit weiteren Schichten kombiniert werden.

Desweiteren betrifft die Erfindung die Verwendung der erfindungsgemäßen Mischungen zur Herstellung keramischer Schichten.

Weiterhin betrifft die Erfindung keramische Schichten erhältlich nach dem erfindungsgemäßen Verfahren. Bei diesen Schichten handelt es sich bevorzugt um oxidische Schichten, besonders bevorzugt um piezokeramische Schichten entsprechend der Formel PbTiₓZr₍₁₋ₓ₎O₃, wobei x Werte zwischen 0 und 1 annehmen kann, bevorzugt Werte zwischen 0.1 und 0.9, besonders bevorzugt Werte zwischen 0.4 und 0.6. Die Schichten können auch mit weiteren Metallen, wie beispielsweise Lanthan dotiert sein.

Solche Schichten können in vielen Bereichen verwendet werden. Durch die im erfindungsgemäßen Verfahren einfach herstellbaren dünnen Schichten können beispielsweise die bisher nur im aufwendigen Sputterverfahren herstellbaren Schichten, wie beispielsweise aus ZnO, ersetzt werden.

Mögliche Anwendungsgebiete der Schichten sind abhängig von ihren Eigenschaften Anwendungen in der Elektronik und Sensorik, beispielsweise als Dielektrikum. Im Falle von piezokeramischen Schichten beispielsweise für Sensoren und Aktoren, wie Ultraschallerzeuger, Drucksensoren, elektroakustische Wandler, Schallsensoren, Entfernungsmesser, Beschleunigungssensoren, Vibrationskontrolle, d. h. als Sensor bzw. Aktor zur Schwingungsüberwachung, bzw. Schwingungsregelung, oder Temperatursensoren.

Dabei erlauben dünne Schichten, beispielsweise von PZT, besonders hohe Frequenzbereiche bei Ultraschallsensoren. Durch die Erfindung können nun solche Schichten besonders wirtschaftlich und effizient gefertigt werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: EDX einer PZT-Schicht; (EDX: Energiedispersive Röntgenspektroskopie);
- Fig. 2: REM-Aufnahme einer PZT-Schicht, Draufsicht (REM: Rasterelektronenmikroskop);
- Fig. 3: REM-Aufnahme einer PZT-Schicht, Querschnitt.
- Fig. 4: Röntgendiffraktogramm eines Pt/Ti/Si-Wavers (Fig. 4b) und eines Pt/Ti/Si-Wafers mit PZT-Schicht (Fig. 4a).

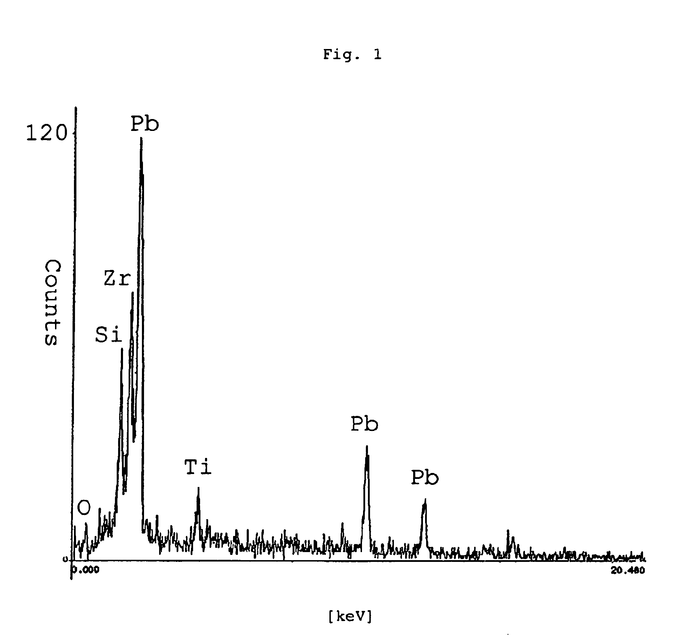

Fig. 1 zeigt ein EDX einer PZT-Schicht auf einem Silizium-Wafer entsprechend der Erfindung (JEOL, JSM 6400 F; 30 30 keV, takeoff-angle 35,75 deg). Es sind deutlich die Signale von Zr, Ti und Pb zu erkennen.

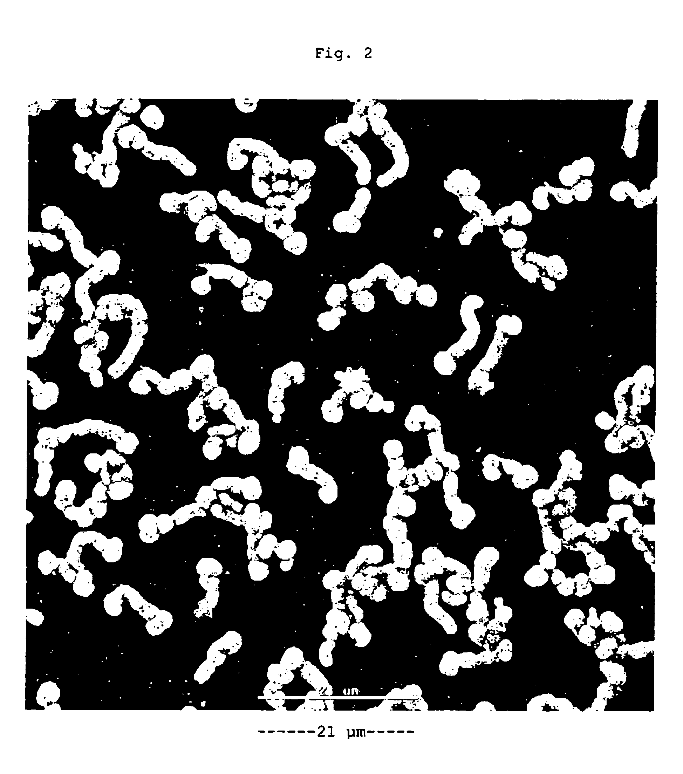

Fig. 2 zeigt eine REM-Aufnahme einer PZT-Schicht nach dem erfindungsgemäßen Verfahren.

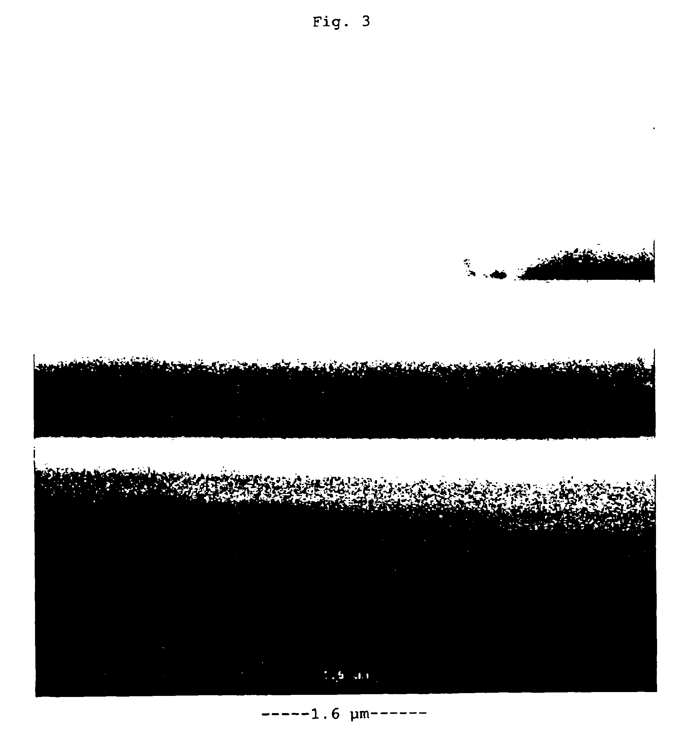

Fig. 3 zeigt einen Querschnitt einer ca. 1.6 µm dicken PZT-Schicht auf einem Silizium-Wafer.

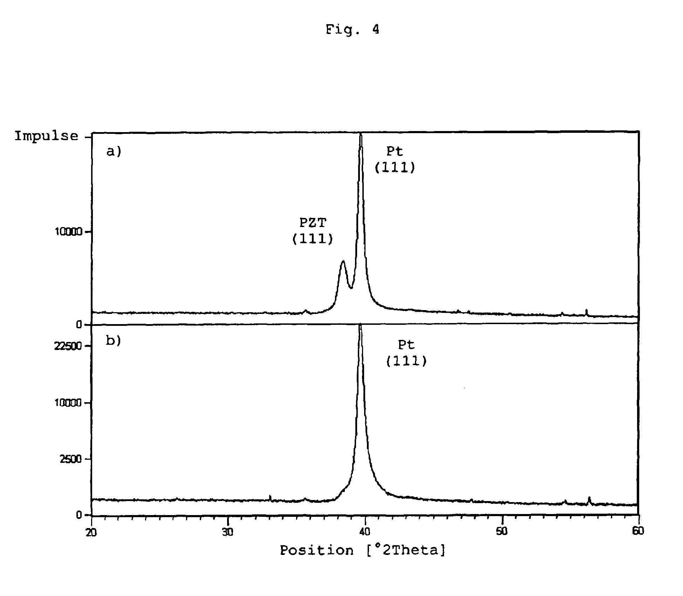

Fig. 4 zeigt Röntgendiffraktogramm eines Pt/Ti/Si-Wavers (Fig. 4b) und eines Pt/Ti/Si-Wafers mit PZT-Schicht (Fig. 4a). Die Schichten sind maximal 300 nm dick. Das XRD-Sprektrum (Fig. 4a)) zeigt nur den PZT (111)-Peak als neues Signal im Vergleich zum reinen Substrat (Fig. 4b). Dies belegt die Vorzugsorientierung der gewachsenen PZT-Schicht in der 111 Richtung und die hohe Qualität der Schicht.

Es sind zahlreiche Abwandlungen und Weiterbildungen der beschriebenen Ausführungsbeispiele verwirklichbar.

Alle Reaktionsschritte zur Herstellung der bimetallischen Precursor wurden unter N₂-Intertgasathmosphäre durchgeführt. Die eingesetzten Lösungsmittel wurden mit den Methoden aus dem Stand der Technik getrocknet oder in der entsprechenden Qualität kommerziell erworben.

### Beispiel 1: Herstellung von Et₃PbN(SiMe₃)₂:

Zu einer Dispersion von Et₃PbCl (2.28 g) in Toluol wurde eine Lösung von LiN(SiMe₃)₂ (1.15 g) gegeben und über Nacht gerührt und danach wurde vom entstandenen Feststoff abfiltriert. Das Lösungsmittel wurde mit Unterdruck entfernt und das Filtrat im Vakuum (beispielsweise mit einem Druck zwischen 1*10⁻¹ und 1*10⁻³ mbar) bei 115 °C destilliert. Et₃PbN(SiMe₃)₂ kondensierte bei einer Temperatur zwischen 75 °C und 80 °C als gelbes Öl.

### Beispiel 2: Herstellung von Et₃PbOZr(OtBu)₃:

Zu einer Lösung von Et₃PbN(SiMe₃)₂ (2 mL) hergestellt nach Beispiel 1 in Toluol (10 mL) wurde Zr(NEt₂)₄ (2.03 mL) und tert.-Butanol (3.3 mL) gegeben. Nach fast vollständiger Entfärbung der Lösung wurden Nebenprodukte und das Lösungsmittel im Vakuum entfernt. Man erhielt Et₃PbOZr(OtBu)₃ als gelbes Öl mit einem Siedepunkt von 25 °C bei 240 mTorr. Im ¹H-NMR (C₆D₆) liegen die tert.-Butyl-Gruppen bei 1.36 ppm und die Ethyl-Gruppen kommen in einem Bereich zwischen 1.0 und 2.0 ppm mit den Hauptresonanzen bei 1.59 ppm und 1.88 ppm.

### Beispiel 3: Herstellung von Et₃PbOTi(OtBu)₃

Zu einer Lösung von Et₃PbN(SiMe₃)₂ (0.7 mL) hergestellt nach Beispiel 1 in Toluol (5 mL) wurde Ti(NEt₂)₄ (0.55 mL) und tert.-Butanol (0.9 mL) gegeben. Nach fast vollständiger Entfärbung der Lösung wurden Nebenprodukte und das Lösungsmittel im Vakuum entfernt. Man erhielt Et₃PbOTi(OtBu)₃ als gelbes Öl mit einem Siedepunkt von 30 °C bei 200 mTorr. Im ¹H-NMR (C₆D₆) liegen die tert.-Butyl-Gruppen bei 1.40 ppm und die Ethyl-Gruppen kommen in einem Bereich zwischen 1.0 und 2.0 ppm mit den Hauptresonanzen bei 1.52 ppm und 1.70 ppm.

### Beispiel 4: Herstellung von PZT

Die beiden hergestellten Precursoren aus Beispiel 2 und Beispiel 3 wurden unter N₂-Inertgasathmosphäre in einem Verhältnis von zwischen 1.1:1 zu 1:1.1 (Volumen) vermischt, bevorzugt ist ein Verhältnis von Et₃PbOTi (OtBu)₃ zu Et₃PbOZr (OtBu)₃ von 1.03:1. Die Mischung hat einen Siedepunkt von ungefähr 28 °C bei 20 mTorr.

Mit dieser erhaltenen Mischung wurde in einer Standard-MOCVD-Apparatur bei 20 mTorr und 28 °C Precursortemperatur und einer Substrattemperatur von 550 °C eine PZT-Schicht auf einem Si-Wafer als Substrat abgeschieden. Dabei wurde in 25 Minuten eine 1.6 µm dicke PZT-Schicht erhalten. Anhand von EDX konnten in dieser Schicht Pb, Zr, Ti und 0 nachgewiesen werden (Fig. 1). Ab einer Dicke von 1.6 µm kann es dazu kommen, dass auf der PZT-Schicht Strukturen mit einer geringfügig abweichenden Stöchiometrie wachsen.

### Beispiel 5: Herstellung von PZT

Die beiden hergestellten Precursoren aus Beispiel 2 und Beispiel 3 wurden unter N₂-Inertgasathmosphäre in einem Verhältnis von zwischen 1.1:1 zu 1:1.1 (Volumen) vermischt, bevorzugt ist ein Verhältnis von Et₃PbOTi(OtBu)₃ zu Et₃PbOZr(OtBu)₃ von 1.03:1. Die Mischung hat einen Siedepunkt von ungefähr 28 °C bei 20 mTorr. Mit dieser erhaltenen Mischung wurde in einer Standard-MOCVD-Apparatur bei 20 mTorr und 28 °C Precursortemperatur und einer Substrattemperatur von 450 °C eine PZT-Schicht auf einem Pt/Ti/Si-Substrat abgeschieden. Dabei wurde in 15 Minuten eine transparente kristalline 300 nm dicke PZT-Schicht erhalten. Mittels Röntgendiffraktometrie konnte ein vorzugsorientiertes Wachstum der PZT-Schicht in (111)-Richtung nachgewiesen werden (Fig. 4). Unter bestimmten Umständen, wie beispielsweise zu hohem Druck des Precursors kann es dazu kommen, dass auf der PZT-Schicht oder dem Substrat eindimensionale Strukturen mit einer geringfügig abweichenden Stöchiometrie wachsen.

### Liste der zitierten Literatur:

US 5,326,892

## Patentansprüche

1. Mischung von volatilen Precursoren für MOCVD von keramischen Schichten, **dadurch gekennzeichnet, dass**
die Mischung einen volatilen bimetallischen Precursor und einen weiteren volatilen bimetallischen Precursor umfasst, wobei die bimetallischen Precursoren jeweils eine Verbindung der Formel (I)
(R¹)ₐMOM' (R²)_{b} (I)
sind, worin M Pb, V, Ba, Sr oder Zn und M' Ti, Zr, Hf, Ge, Ta, Nb oder ein Lanthanoid darstellen;
die Reste R¹ und auch R² jeweils gleich oder verschiedene Reste darstellen, ausgewählt aus der Gruppe enthaltend gesättigte oder ungesättigte Alkyl-, Alkoxy-, Aryloxy-, Alkaryloxy-, Acyloxy-, Alkylcarbonylreste, Amide, Imide, β-Diketone, β-Diiminate und Cyclopentadienyle und
a und b entsprechend der Valenz von M und M` unabhängig voneinander Werte zwischen 1 und 5 haben.

2. Mischung nach Anspruch 1, **dadurch gekennzeichnet, dass**
R¹ Alkylreste ausgewählt aus der Gruppe enthaltend Methyl, Ethyl, n-Propyl, i-Propyl, n-Butyl, i-Butyl, sek.-Butyl, tert.-Butyl und Neopentyl und R² Alkoxyreste ausgewählt aus der Gruppe enthaltend Methoxy, Ethoxy, i-Propoxy, n-Propoxy, n-Butoxy, i-Butoxy, sek-Butoxy und tert.-Butoxy darstellen.

3. Mischung nach einem der Ansprüche 1 oder 2, **dadurch gekennzeichnet, dass**
die Mischung insgesamt mehr als 2 unterschiedliche Metalle enthält.

4. Mischung nach einem der Ansprüche 1 bis 3, **dadurch gekennzeichnet, dass**
sich die weitere bimetallische Verbindung nur im Metall M' von der bimetallischen Verbindung unterscheidet.

5. Mischung nach einem der Ansprüche 1 bis 4, **dadurch gekennzeichnet, dass**
sie kein Lösungsmittel enthält.

6. Gasförmige Zusammensetzung für MOCVD von keramischen Schichten, **dadurch gekennzeichnet, dass**
die gasförmige Zusammensetzung aus einer Mischung nach einem der Ansprüche 1 bis 5 erzeugt wird.

7. Verfahren zur Herstellung Schichten mittels MOCVD, **dadurch gekennzeichnet, dass**
eine gasförmige Zusammensetzung in einen Reaktionsraum mit einem Substrat eingebracht wird, wobei die gasförmige Zusammensetzung nach einem der Ansprüche 1 bis 5 ist.

8. Verwendung einer Mischung nach einem der Ansprüche 1 bis 5 zur Herstellung von keramischen Schichten.

9. Keramische Schicht, erhältlich nach einem Verfahren nach Anspruch 7.

## Claims

1. Mixture of volatile precursors for MOCVD of ceramic layers, **characterized in that** the mixture comprises a volatile bimetallic precursor and a further volatile bimetallic precursor, where the bimetallic precursors are each a compound of the formula (I)
(R¹)ₐMOM'(R²)_{b} (I)
where M is Pb, V, Ba, Sr or Zn and
M' is Ti, Zr, Hf, Ge, Ta, Nb or a lanthanide;
the radicals R¹ and R² are in each case identical or different radicals selected from the group consisting of saturated or unsaturated alkyl, alkoxy, aryloxy, alkaryloxy, acyloxy, alkylcarbonyl radicals, amides, imides, β-diketones, β-diiminates and cyclopentadienyls and
a and b independently have, depending on the valence of M and M', values in the range from 1 to 5.

2. Mixture according to Claim 1, **characterized in that**
the radicals R¹ are alkyl radicals selected from the group consisting of methyl, ethyl, n-propyl, i-propyl, n-butyl, i-butyl, sec-butyl, tert-butyl and neopentyl and the radicals R² are alkoxy radicals selected from the group consisting of methoxy, ethoxy, i-propoxy, n-propoxy, n-butoxy, i-butoxy, sec-butoxy and tert-butoxy.

3. Mixture according to either Claim 1 or 2, **characterized in that**
the mixture contains a total of more than 2 different metals.

4. Mixture according to any of Claims 1 to 3, **characterized in that**
the further bimetallic compound differs from the bimetallic compound only in the metal M'.

5. Mixture according to any of Claims 1 to 4, **characterized in that**
it does not contain a solvent.

6. Gaseous composition for MOCVD of ceramic layers, **characterized in that**
the gaseous composition is produced from a mixture according to any of Claims 1 to 5.

7. Process for producing layers by means of MOCVD, **characterized in that**
a gaseous composition is introduced into a reaction space containing a substrate, where the gaseous composition is produced from a mixture according to any of Claims 1 to 5.

8. Use of a mixture according to any of Claims 1 to 5 for producing ceramic layers.

9. Ceramic layer which can be obtained by a process according to Claim 7.

## Revendications

1. Mélange de précurseurs volatils pour MOCVD de couches céramiques, **caractérisé en ce que** le mélange comprend un précurseur bimétallique volatil et un autre précurseur bimétallique volatil, les précurseurs bimétalliques étant chacun un composé de formule (I)
(R¹)ₐMOM' (R²)_{b} (I)
dans laquelle M représente Pb, V, Ba, Sr ou Zn et
M' représente Ti, Zr, Hf, Ge, Ta, Nb ou un lanthanide ;
les radicaux R¹ et également R² représentent chaque fois des radicaux identiques ou différents, choisis dans le groupe contenant des radicaux alkyle, alcoxy, aryloxy, alkaryloxy, acyloxy, alkylcarbonyle saturés ou insaturés, des amides, imides, β-dicétones, β-diiminates et cyclopentadiényles et
a et b ont indépendamment l'un de l'autre des valeurs comprises entre 1 et 5, selon la valence de M et M'.

2. Mélange selon la revendication 1, **caractérisé en ce que**
R¹ représente des radicaux alkyle choisis dans le groupe contenant les radicaux méthyle, éthyle, n-propyle, isopropyle, n-butyle, isobutyle, sec-butyle, tert-butyle et néopentyle et R² représente des radicaux alcoxy choisis dans le groupe contenant les radicaux méthoxy, éthoxy, isopropoxy, n-propoxy, n-butoxy, isobutoxy, sec-butoxy et tert-butoxy.

3. Mélange selon la revendication 1 ou 2, **caractérisé en ce que**
le mélange contient au total plus de 2 métaux différents.

4. Mélange selon l'une quelconque des revendications 1 à 3, **caractérisé en ce que** l'autre composé bimétallique ne diffère du composé bimétallique que par le métal M'.

5. Mélange selon l'une quelconque des revendications 1 à 4, **caractérisé en ce qu'**il ne contient aucun solvant.

6. Composition gazeuse pour MOCVD de couches céramiques, **caractérisée en ce que** la composition gazeuse est produite à partir d'un mélange selon l'une quelconque des revendications 1 à 5.

7. Procédé pour la production de couches par MOCVD, **caractérisé en ce qu'**on introduit une composition gazeuse dans une chambre de réaction avec un substrat, la composition gazeuse étant produite à partir d'un mélange selon l'une quelconque des revendications 1 à 5.

8. Utilisation d'un mélange selon l'une quelconque des revendications 1 à 5, pour la production de couches céramiques.

9. Couche céramique, pouvant être obtenue conformément à un procédé selon la revendication 7.
